# EUROPÄISCHE PATENTANMELDUNG

(11) **EP 4 450 918 A1**
(43) Veröffentlichungstag der Anmeldung: **23.10.2024**
(21) Anmeldenummer: 24164910.2
(22) Anmeldetag: 20.03.2024
(51) Int. Cl.: G01B 11/22, B60C 11/24, G01B 11/25, G01M 17/02, G06T 7/00

(54) **VERFAHREN ZUR BEWERTUNG DES PROFILZUSTANDES VON FAHRZEUGREIFEN**

(30) Priorität: 20.04.2023 DE 102023203615
(71) Anmelder: Continental Reifen Deutschland GmbH, 30175 Hannover (DE)
(72) Erfinder: Pietsch, Holger, 30175 Hannover (DE); Dixo, Eduardo, 4760-606 Lousado (PT); Ferreira Lopes, Daniel Pedro, 4760-606 Lousado (PT); Großkreutz, Holger, 30175 Hannover (DE); Voelker, Bert, 30175 Hannover (DE); Fricke, Lukas, 30175 Hannover (DE); Strzelczyk, Matthias, 30175 Hannover (DE)
(74) Vertreter: Continental Corporation

(57) **Zusammenfassung**

Die Erfindung betrifft ein Verfahren zur Bewertung des Profilzustandes eines Laufstreifenprofils von Fahrzeugreifen (10) mit einer elektronischen Zustandsbewertungsvorrichtung (12), umfassend die Verfahrensschritte: a) Ausrichten der optischen Sensoranordnung (14) auf einen Profilabschnitt (22) des Laufstreifenprofils des Fahrzeugreifens (10), b) Aufnehmen von optischen Sensordaten des Profilabschnitts (22) mit der optischen Sensoranordnung (14), und c) Auswerten der aufgenommenen optischen Sensordaten mit der elektronischen Datenverarbeitungsvorrichtung (18) zur Bewertung des Profilzustandes des Fahrzeugreifens im Profilabschnitt (22), wobei in Verfahrensschritt b) zusätzlich zu den optischen Sensordaten oder als Bestandteil der optischen Sensordaten ein Kamerabild des Profilabschnitts (22) mit der Kamera (16) aufgenommen wird, wobei die elektronische Datenverarbeitungsvorrichtung (18) dazu eingerichtet ist, mittels eines auf maschinellem Lernen basierenden Identifikationsmoduls (26) im Kamerabild mit Verunreinigungen blockierte Profilbereiche (24) im Profilabschnitt (22) zu identifizieren, wobei die identifizierten blockierten Profilbereiche (24) bei der Bewertung des Profilzustandes in Verfahrensschritt c) nicht oder in verringertem Umfang berücksichtigt werden.

## Beschreibung

Die Erfindung betrifft ein Verfahren zur Bewertung des Profilzustandes eines Laufstreifenprofils von Fahrzeugreifen mit einer elektronischen Zustandsbewertungsvorrichtung sowie eine Zustandsbewertungsvorrichtung für den Einsatz in einem entsprechenden Verfahren. Offenbart wird zudem ein Computerprogrammprodukt für eine solche Zustandsbewertungsvorrichtung.

Angesichts einer stetigen Zunahme des weltweiten Straßenverkehrs und des damit verbundenen Anstiegs an Verkehrsunfällen wird dem Aspekt der Fahrsicherheit in den letzten Jahren eine immer größere Bedeutung beigemessen. Ein Fahrzeugbestandteil, welcher maßgeblich für die Fahrsicherheit mitverantwortlich ist, sind die eingesetzten Fahrzeugreifen, die beispielsweise gezielt auf die zu erwartenden Umwelteinflüsse abgestimmt werden, um das Fahr- und Bremsverhalten zu optimieren.

Neben der Art der eingesetzten Gummimischung kommt dabei hinsichtlich der fahrsicherheitsrelevanten Eigenschaften der Fahrzeugreifen insbesondere dem Reifenprofil eine besondere Bedeutung zu, welches durch seine Strukturierung maßgeblich für die Fahr- und Bremseigenschaften mitverantwortlich ist. Bei längerem Betrieb nutzen sich Fahrzeugreifen jedoch ab, wobei das Laufstreifenprofil und die spezifische Strukturierung mit der Zeit abgetragen werden. Angesichts der hohen sicherheitstechnischen Relevanz eines ausreichend ausgeprägten Laufstreifenprofils bestehen in vielen Ländern strenge Vorgaben über die einzuhaltenden Mindestprofiltiefen.

In vielen Ländern ist der Fahrzeughalter dabei dazu angehalten, die verbleibende Profiltiefe der Fahrzeugreifen regelmäßig zu bestimmen und zu kontrollieren. In der Alltagspraxis kommen hierfür teilweise sehr einfache Tests unter Einsatz eines Lineals oder ähnlicher Größenreferenzen zum Einsatz.

Im Zuge der fortschreitenden Digitalisierung wurde insoweit versucht, die Bestimmung der Profilrillentiefe mit elektronischen Auswerteeinrichtungen vorzunehmen, die beispielsweise ausgehend von Bildaufnahmen die verbleibende Profiltiefe abschätzen können.

An den im Stand der Technik vorgeschlagenen (teil-)automatisierten Verfahren zur Bestimmung der verbleibenden Profiltiefe mit elektronischen Geräten wird jedoch in vielen Fällen als nachteilig empfunden, dass diese nicht oder zumindest nicht ausreichend gut dafür geeignet sind, die Bewertung des Profilzustandes von Fahrzeugreifen auch in Alltagssituationen präzise vorzunehmen. In der Alltagspraxis sind die Fahrzeugreifen eines Fahrzeugs nämlich regelmäßig verschmutzt und weisen folglich in ihrem Reifenprofil Schmutzablagerungen oder temporär eingeklemmte Fremdkörper, beispielsweise kleine Steine oder Holzstücke, auf.

Solche mit Verunreinigungen blockierte Profilbereiche sind dabei in den meisten Fällen nicht fahrsicherheitsrelevant und lösen sich im weiteren Betrieb des Fahrzeugs beispielsweise in Folge der mechanischen Deformation des Fahrzeugreifens im Fahrbetrieb häufig mit der Zeit von selbst auf. Entsprechend bedingen solche Verunreinigungen im Reifenprofil regelmäßig keine Notwendigkeit, den entsprechenden Fahrzeugreifen auszuwechseln.

Die im Stand der Technik vorgeschlagenen (teil-)automatisierten Verfahren zur Bestimmung der verbleibenden Profiltiefe mit elektronischen Geräten sind in vielen Fällen nicht oder nur unzureichend in der Lage, lediglich temporäre Verunreinigungen zuverlässig zu identifizieren und diese nicht in die Bewertung des Profilzustandes einfließen zu lassen. Vielmehr werden entsprechend verunreinigte Profilbereich in vielen Fällen fälschlicherweise als Bereiche mit stark verringerter Profiltiefe interpretiert, woraus eine Unterbewertung der verbleibenden Profilqualität resultiert, die beispielsweise zu einer unzutreffenden Empfehlung zum Austausch des Fahrzeugreifen führen kann. Insgesamt wird durch dieses Problem die Überwachung des Profilzustandes von Fahrzeugreifen und die Vorhersagegenauigkeit der Reifenlebenszeit auf Grundlage dieser Bewertung erheblich erschwert. Die vorstehend beschriebenen Probleme wirken sich dabei insbesondere auch im Bereich der Nutz- und Arbeitsfahrzeugflotten besonders negativ aus, da diese in vielen Fällen auf Untergründen eingesetzt werden, die einen starken Verunreinigungszustand der Fahrzeugreifen begünstigen, beispielsweise in schlammigen oder steinigen Arbeitsbereichen.

Informationen zum technologischen Hintergrund sind beispielsweise in der CN 107229938 A, der CN 112907568 A, der US 10,475,201 B1, der US 10,859,468 B2 oder der US 11,338,621 B2 offenbart.

Es war die primäre Aufgabe der vorliegenden Erfindung, die Nachteile des Standes der Technik auszuräumen oder zumindest zu verringern.

Insbesondere war es die Aufgabe der vorliegenden Erfindung, ein Verfahren zur Bewertung des Profilzustandes eines Laufstreifenprofils von Fahrzeugreifen anzugeben, mit dem insbesondere die Profiltiefe bzw. der Profilzustand in einem gebrauchten Fahrzeugreifen zuverlässig bestimmt werden kann, ohne dass etwaige Verunreinigungen im Profil die Bewertung des Profilzustandes verfälschen.

Insoweit war es eine Aufgabe der vorliegenden Erfindung, dass das anzugebende Verfahren eine hohe Prozesssicherheit bieten sollte, so dass die Bewertung des Profilzustandes auch in Anwesenheit einer breiten Palette an möglichen Verunreinigungen zuverlässig erfolgen können sollte.

Zudem war es eine Aufgabe der vorliegenden Erfindung, dass das anzugebende Verfahren nicht nur eine vorteilhafte Genauigkeit aufweisen sollte, sondern auch besonders ressourceneffizient durchführbar sein sollte, insbesondere hinsichtlich der benötigten Rechenkapazität.

Es war eine Aufgabe der vorliegenden Erfindung, dass das anzugebende Verfahren möglichst weitgehend automatisiert bzw. digitalisiert durchführbar sein sollte, wobei es wünschenswert war, dass das anzugebende Verfahren auch mit solchen mobilen Endgeräten durchführbar sein sollte, auf die die meisten Fahrzeughalter ohnehin Zugriff haben.

Darüber hinaus war es eine Aufgabe der vorliegenden Erfindung, dass das anzugebende Verfahren besonders effizient auf das Produktportfolio eines Reifenherstellers und/oder eine bestimmte Klasse von Fahrzeugreifen, beispielsweise Winterreifen oder Spezialreifen für Arbeitsfahrzeuge, abgestimmt und optimiert werden können sollte.

Darüber hinaus war es eine Aufgabe der vorliegenden Erfindung, eine Zustandsbewertungsvorrichtung für den Einsatz in einem entsprechenden Verfahren anzugeben.

Es war eine sekundäre Aufgabe der vorliegenden Erfindung, ein Computerprogrammprodukt für eine solche Zustandsbewertungsvorrichtung bereitzustellen, mit dem das anzugebende Verfahren durchgeführt werden kann.

Die Erfinder der vorliegenden Erfindung haben nunmehr gefunden, dass sich die vorstehend beschriebenen Aufgaben lösen lassen, wenn ein Verfahren zur Bewertung des Profilzustandes eines Laufstreifenprofils, welches auf der Auswertung von am Laufstreifenprofil aufgenommenen optischen Sensordaten basiert, mit der Aufnahme eines Kamerabildes des Fahrzeugreifens kombiniert, in dem mit Verunreinigungen blockierte Profilbereiche über ein auf maschinellem Lernen basierendes Identifikationsmodul identifiziert werden, um diese Bereiche bei der Auswertung der optischen Sensordaten und der entsprechenden Bewertung des Profilzustandes weniger oder gar nicht zu berücksichtigen, wie es in den Ansprüchen definiert ist. Hierdurch ist es in einer zeit- und ressourcenschonenden Weise möglich, in einem hochgradig digitalisierten und automatisierten Verfahren den Profilzustand in einem gebrauchten Fahrzeugreifen zuverlässig zu bestimmen, ohne dass etwaige Verunreinigungen im Profil die Bewertung des Profilzustandes verfälschen, wobei der Einsatz von künstlicher Intelligenz insbesondere auch die zuverlässige Identifikation einer breiten Palette an möglichen Verunreinigungen ermöglicht.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Zustandsbewertungsvorrichtungen und Computerprogrammprodukte ergeben sich aus den Merkmalen bevorzugter Verfahren.

Die Erfindung betrifft ein Verfahren zur Bewertung des Profilzustandes eines Laufstreifenprofils von Fahrzeugreifen mit einer elektronischen Zustandsbewertungsvorrichtung, umfassend:
i) eine optische Sensoranordnung mit einer Kamera, und
ii) eine elektronische Datenverarbeitungsvorrichtung mit einer Speichereinheit,
umfassend die Verfahrensschritte:
a) Ausrichten der optischen Sensoranordnung auf einen Profilabschnitt des Laufstreifenprofils des Fahrzeugreifens,
b) Aufnehmen von optischen Sensordaten des Profilabschnitts mit der optischen Sensoranordnung, und
c) Auswerten der aufgenommenen optischen Sensordaten mit der elektronischen Datenverarbeitungsvorrichtung zur Bewertung des Profilzustandes des Fahrzeugreifens im Profilabschnitt,

wobei in Verfahrensschritt b) zusätzlich zu den optischen Sensordaten oder als Bestandteil der optischen Sensordaten ein Kamerabild des Profilabschnitts mit der Kamera der Sensoranordnung aufgenommen wird,
wobei die elektronische Datenverarbeitungsvorrichtung dazu eingerichtet ist, im Kamerabild mit Verunreinigungen blockierte Profilbereiche im Profilabschnitt zu identifizieren,
wobei das Identifizieren von mit Verunreinigungen blockierten Profilbereichen im Kamerabild mittels eines auf der Speichereinheit gespeicherten, auf maschinellem Lernen basierenden Identifikationsmoduls erfolgt, wobei die elektronische Datenverarbeitungsvorrichtung dazu eingerichtet ist, das aufgenommene Kamerabild des Profilabschnitts als Eingabe in das Identifikationsmodul zu geben und mit dem Identifikationsmodul mit Verunreinigungen blockierte Profilbereiche im Profilabschnitt zu identifizieren,
wobei das Identifikationsmodul dazu trainiert ist, in einem Kamerabild eines Laufstreifenprofils mit Verunreinigungen blockierte Profilbereiche im Profilabschnitt zu identifizieren, wobei das Training des Identifikationsmoduls durch überwachtes Lernen mit einem Satz von Trainingsdaten erfolgt, welcher eine Vielzahl von Kamerabildern von Profilabschnitten umfasst, welche mit unterschiedlichen, bekannten Verunreinigungen blockierte Profilbereiche umfassen, und
wobei die identifizierten blockierten Profilbereiche bei der Bewertung des Profilzustandes in Verfahrensschritt c) nicht oder in verringertem Umfang, bevorzugt nicht, berücksichtigt werden.

Das erfindungsgemäße Verfahren eignet sich prinzipiell zur Bestimmung des Profilzustandes von sämtlichen Fahrzeugreifen, sofern diese im Laufstreifen über ein Profil verfügen, welches bewertet werden kann. Besonders praxisrelevant ist ein erfindungsgemäßes Verfahren, wobei der Fahrzeugreifen ein Fahrzeugluftreifen oder ein Vollgummireifen ist. Beispielhaft ist ein erfindungsgemäßes Verfahren, wobei der Fahrzeugreifen ein LKW- oder PKW-Reifen, bevorzugt ein PKW-Reifen, ist. Beispielhaft ist alternativ ein erfindungsgemäßes Verfahren, wobei der Fahrzeugreifen ein Spezialreifen, bevorzugt eine Spezialreifen für Arbeitsfahrzeuge, ist.

Das erfindungsgemäße Verfahren wird unter Zuhilfenahme einer Zustandsbewertungsvorrichtung durchgeführt. Diese Zustandsbewertungsvorrichtung umfasst dabei eine optische Sensoranordnung, welche zumindest eine Kamera umfasst, sowie eine elektronische Datenverarbeitungsvorrichtung mit zumindest einer Speichereinheit, wobei die Datenverarbeitungsvorrichtung in Übereinstimmung mit dem fachmännischen Verständnis bei der Umsetzung der Verfahrensschritte b) und c) des erfindungsgemäßen Verfahrens zum Einsatz kommt, wobei die hierfür notwendige Einrichtung der insbesondere Datenverarbeitungsvorrichtung insbesondere durch ein Computerprogrammprodukt erreicht wird, wie es nachfolgend offenbart ist.

Es kann als Vorteil des erfindungsgemäßen Verfahrens gesehen werden, dass die Zustandsbewertungsvorrichtung prinzipiell in sehr unterschiedlicher Weise ausgeführt werden kann. Insbesondere für den Einsatz in Fachbetrieben kann diese als leistungsstarke stationäre Vorrichtung vorgesehen werden, beispielsweise in der Form eines Teststandes. Hierdurch sind regelmäßig durch eine feste Anordnung und Ausrichtung der Bestandteile der optische Sensoranordnung relativ zu einem im Teststand angeordneten Fahrzeug und/oder Fahrzeugreifen besonders präzise Bewertungen möglich, wobei insbesondere die Korrelation zwischen den im Kamerabild identifizierten mit Verunreinigungen blockierten Profilbereichen zu den entsprechenden Abschnitten in den aufgenommenen optischen Sensordaten besonders leicht erfolgen kann. Für bestimmte Anwendungen bevorzugt ist somit ein erfindungsgemäßes Verfahren, wobei die elektronische Zustandsbewertungsvorrichtung eine stationäre Zustandsbewertungsvorrichtung, bevorzugt ein Messstand, ist.

Nach Einschätzung der Erfinder eignet sich das erfindungsgemäße Verfahren jedoch besonders gut dafür, auch dem Endkunden und Fahrzeughalter eine zuverlässige Bewertung des Profilzustandes eines Laufstreifenprofils von Fahrzeugreifen zu ermöglichen, in welchem Fall die Zustandsbewertungsvorrichtung insbesondere durch solche elektronischen Endgeräte bereitgestellt werden kann, die beim Endnutzer ohnehin verfügbar sind. Bevorzugt ist somit ein erfindungsgemäßes Verfahren, wobei die elektronische Zustandsbewertungsvorrichtung eine tragbare Zustandsbewertungsvorrichtung, bevorzugt eine mobiles elektronisches Endgerät, bevorzugt ein Mobiltelefon oder ein Tablet, ist.

Das erfindungsgemäße Verfahren basiert, wie vorstehend erläutert, insbesondere darauf, dass ein auf optischen Sensordaten basierendes Verfahren zur Bewertung des Profilzustands von Fahrzeugreifen durch eine auf maschinellem Lernen basierende Korrekturroutine ergänzt wird. Der Fachmann versteht insoweit, dass das erfindungsgemäße Verfahren hinsichtlich des zur eigentlichen Bewertung des Profilzustandes verwendeten Verfahrens prinzipiell nicht beschränkt ist, sodass zahlreiche der aus dem Stand der Technik bekannten Verfahren zur Bewertung des Profilzustandes zum Einsatz kommen können. In Übereinstimmung hiermit handelt es sich bei der optischen Sensoranordnung der Zustandsbewertungsvorrichtung auch um eine Anordnung solcher optischer Sensoren, welche für das vom Fachmann jeweils angestrebte Bewertungsverfahren benötigt werden.

Die Klarstellung, dass es sich um eine optische Sensoranordnung bzw. optische Sensordaten handelt, ist im Rahmen der vorliegenden Erfindung breit auszulegen und dient der Abgrenzung gegenüber mechanischen Sensoren, welche beispielsweise eine physikalische Abtastung des Reifenprofils vornehmen würden. Die optische Sensoranordnung umfasst entsprechend optische Sensoren, welche optische Sensordaten durch die Detektion und/oder Analyse elektromagnetischer Strahlung sammeln. Nach Einschätzung der Erfinder mag es dabei für spezialisierte Anwendungen interessant sein, für die optische Sensoranordnung bzw. für die Erfassung der optischen Sensordaten auf elektromagnetische Strahlung zurückzugreifen, bei der es sich nicht um sichtbares Licht handelt, beispielsweise auf IR-Strahlung oder Radiowellen. Für die weit überwiegende Zahl der Fälle ist es jedoch explizit bevorzugt, auf eine optische Sensorik zurückzugreifen, welche im Wesentlichen auf der Verarbeitung von sichtbarem Licht basiert, wobei insbesondere der Einsatz von Kameras besonders bevorzugt ist.

Die optische Sensoranordnung der Zustandsbewertungsvorrichtung dient im erfindungsgemäßen Verfahren der Aufnahme von optischen Sensordaten des Profilabschnitts. Zum Zwecke der Bewertung des Profilzustands des Fahrzeugreifens werden diese optischen Sensordaten ausgewertet. In der Praxis ist die für die Bewertung des Profilzustandes maßgebliche Größe regelmäßig die verbliebene Profiltiefe, insbesondere die Profiltiefe der zentralen umlaufenden Profilrille. Vor diesem Hintergrund versteht der Fachmann, dass die von der optischen Sensoranordnung bereitgestellten optischen Sensordaten entweder unmittelbar Profiltiefeninformationen enthalten können oder mittels der elektronischen Datenverarbeitungsvorrichtung ausgewertet werden können, um daraus Profiltiefeninformationen abzuleiten, beispielsweise durch Erzeugen einer dreidimensionalen Repräsentation des aufgenommenen Profilabschnitts, aus der sich die ortsaufgelöste Profiltiefe auslesen lässt. Die entsprechende Erzeugung einer dreidimensionalen Repräsentation kann dabei unter Verwendung bekannter Konzepte und kommerziell erhältlicher Software erfolgen, wobei beispielsweise auf die Konzepte des "Iterative Closest Point Algorithm" (ICP), des "Truncated Signed Distance Function" (TSDF), "Kinect Fusion" oder andere Rekonstruktionsalgorithmen zurückgegriffen werden kann. Besonders praxisrelevant ist folglich ein erfindungsgemäßes Verfahren, wobei die optischen Sensordaten Profiltiefeninformationen über die ortsaufgelöste Tiefe des Laufstreifenprofils im Profilabschnitt umfassen, und/oder wobei die elektronische Datenverarbeitungsvorrichtung dazu eingerichtet ist, aus den optischen Sensordaten, bevorzugt aus zwei oder mehr zweidimensionalen Bildern, eine dreidimensionale Repräsentation des Profilabschnitts zu berechnen und aus der dreidimensionalen Repräsentation Profiltiefeninformationen zu erhalten.

Dem Fachmann sind ausgehend von seinem Fachwissen geeignete optische Sensoranordnungen bekannt, mit denen die notwendigen optischen Sensordaten gesammelt werden können. Unter diesen Verfahren wählt der Fachmann die optische Sensoranordnung der Zustandsbewertungsvorrichtung insbesondere im Lichte der jeweiligen Anwendungsanforderungen, beispielsweise hinsichtlich Reichweite, Energiebedarf und Präzision aus. Den Erfindern ist es insoweit jedoch gelungen, unter den verschiedenen Technologien für optische Sensoranordnungen ausgewählte Techniken zu identifizieren, mit denen sich nach Einschätzung der Erfinder besonders zuverlässige und präzise Ergebnisse erhalten lassen.

Insbesondere der Einsatz von optischen Scannern zur Detektion der Oberflächentopografie des Laufstreifenprofils stellt eine sehr leistungsfähige Methode zur Detektion von optischen Sensordaten dar, welche effizient zur Bewertung des Profilzustandes des Fahrzeugreifens herangezogen werden können. Bevorzugt ist entsprechend ein erfindungsgemäßes Verfahren, wobei die optische Sensoranordnung zur Aufnahme der optischen Sensordaten zusätzlich zur Kamera eine oder mehrere optische Sensoreinheiten umfasst, die ausgewählt sind aus der Gruppe bestehend aus Laserscannern und Radarscannern.

Die vorstehend offenbarten optischen Scanner eignen sich nach Einschätzung der Erfinder in einigen Fällen wegen der höheren Anwendungserfordernisse, beispielsweise hinsichtlich der Betriebssicherheit und des Strahlenschutzes, insbesondere für stationäre Zustandsbewertungsvorrichtungen, wobei entsprechende Scanner heutzutage auch in mobilen Endgeräten wie Mobiltelefonen verbaut sind. Nach Einschätzung der Erfinder ist es insoweit besonders vorteilhaft, eine kamerabasierte optische Sensoranordnung einzusetzen, um die benötigten optischen Sensordaten zu detektieren.

Im einfachsten Fall bestehen die optischen Sensordaten in diesem kamerabasierten Fall aus einer Kameraaufnahme, aus der die Profiltiefeninformationen aus der Beleuchtungssituation und dem Schattenwurf im Profil des Fahrzeugreifens abgeleitet werden. Nach Einschätzung der Erfinder ist eine entsprechende Vorgehensweise zwar möglich, erfordert hinsichtlich der Auswertung jedoch vergleichsweise viel Rechenleistung und ist in Abhängigkeit von der Beleuchtungssituation potentiell fehleranfällig. Deswegen schlagen die Erfinder vor, weitere Maßnahmen vorzusehen, mit denen in einer kamerabasierten Sensoranordnung umfassendere Sensordaten erhalten werden können, die die genauere und zuverlässigere Bestimmung einer Profiltiefeninformationen erlauben und hinsichtlich der Datenqualität in vielen Fällen mit Scanner-basierten Methoden vergleichbar sind. Insoweit schlagen die Erfinder vor, dass auf das Konzept von stereoskopischen Bildern bzw. artverwandte Konzepte zurückgegriffen werden kann, um aus den Aufnahmen voneinander beabstandeter Kameras und/oder aus Aufnahmen bei unterschiedlichen Beleuchtungssituationen, welche durch voneinander beabstandete Beleuchtungsvorrichtungen realisiert werden, eine dreidimensionale Repräsentation mit erhöhten Informationsgehalt zu erhalten. Bevorzugt ist somit ein erfindungsgemäßes Verfahren, wobei die optische Sensoranordnung zwei oder mehr voneinander beabstandete Kameras umfasst, wobei die elektronische Datenverarbeitungsvorrichtung dazu eingerichtet ist, eine dreidimensionale Repräsentation des Profilabschnitts aus den Aufnahmen der Kameras zu berechnen. Bevorzugt ist zusätzlich oder alternativ ein erfindungsgemäßes Verfahren, wobei die optische Sensoranordnung zwei oder mehr voneinander beabstandete Beleuchtungsvorrichtungen umfasst, wobei die elektronische Datenverarbeitungsvorrichtung dazu eingerichtet ist, eine dreidimensionale Repräsentation des Profilabschnitts aus den Aufnahmen einer Kamera, bevorzugt der zum Aufnehmen des Kamerabildes verwendeten Kamera, bei unterschiedlicher Beleuchtung zu berechnen.

Zur Reduktion der notwendigen Rechenleistung und zur Verbesserung der Qualität und Zuverlässigkeit der erhaltenen dreidimensionalen Repräsentation bzw. Profiltiefeninformationen in kamerabasierten Verfahren schlagen die Erfinder vor, zusätzlich Projektionsvorrichtungen einzusetzen, um beispielsweise ein Gitternetz von Linien oder Leuchtpunkten auf den Fahrzeugreifen zu projizieren, wobei die Verzerrung des so aufgebrachten Musters auf dem Fahrzeugreifen bei einer kamerabasierten Sensoranordnung eine leichtere und zuverlässigere Identifikation der Profiltiefeninformationen ermöglicht, bzw. die Erstellung einer präzisen dreidimensionalen Repräsentation unterstützt. Vorteilhaft an dieser Ausgestaltung ist auch, dass viele moderne elektronische Endgeräte, beispielsweise Mobiltelefone, bereits entsprechende Projektionsvorrichtungen enthalten, mit denen beispielsweise die Gesichtserkennung unterstützt bzw. ermöglicht wird. Der Fachmann versteht dabei, dass die für die Projektion verwendete elektromagnetische Strahlung nicht zwangsläufig im Bereich des sichtbaren Lichtes liegen muss, sondern beispielsweise auch im IR-Bereich liegen kann, sofern die eingesetzten optischen Sensoreinheiten der optischen Sensoranordnung dazu in der Lage sind, die auf den Fahrzeugreifen projizierten Strukturen bzw. deren Abbildung auf dem Profil wahrzunehmen. Bevorzugt ist somit ein erfindungsgemäßes Verfahren, wobei die optische Sensoranordnung eine Projektionsvorrichtung umfasst, die dazu eingerichtet ist, beim Aufnehmen der optischen Sensordaten mit einer Kamera ein Muster, beispielsweise in Form eines Gitternetzes oder eines Rasters, auf den Profilabschnitt zu projizieren, wobei die elektronische Datenverarbeitungsvorrichtung bevorzugt dazu eingerichtet ist, eine dreidimensionale Repräsentation des Profilabschnitts aus den Aufnahmen der Kamera, bevorzugt der zum Aufnehmen des Kamerabildes verwendeten Kamera, aus der Verzerrung des projizierten Musters in der Aufnahme zu berechnen.

In Verfahrensschritt c) des erfindungsgemäßen Verfahrens folgt nunmehr das Auswerten der in Verfahrensschritt b) aufgenommenen optischen Sensordaten, wobei diese Auswertung mittels der elektronischen Datenverarbeitungsvorrichtung erfolgt. Dieser Schritt hat zum Zweck, den Profilzustand des Fahrzeugreifens zu bewerten. Es kann als Vorteil des erfindungsgemäßen Verfahrens gesehen werden, dass prinzipiell beliebige Informationen, welche aus der Auswertung der optischen Sensordaten ableitbar sind, für die Bewertung des Profilzustandes des Fahrzeugreifens herangezogen werden können. Besonders praxisrelevant ist jedoch der Fall, in dem die Bewertung des Profilzustandes des Fahrzeugreifens im Profilabschnitt zumindest überwiegend, bevorzugt im Wesentlichen vollständig, in Abhängigkeit von der detektierten Profiltiefeninformation erfolgt. Bei dieser Profiltiefeninformation wird es sich in der Praxis um die Profiltiefe der Profilrillen, insbesondere der zentralen Profilrillen, an voneinander beabstandeten Messpositionen handeln. In Abhängigkeit von der gewünschten Genauigkeit des Verfahrens kann hierbei die Auflösung, d.h. der Abstand der Messpositionen und damit die Auflösung der ortsabhängigen Profiltiefeninformationen, erhöht werden. Durch die nachfolgend weiter beschriebene Identifikation von mit Verunreinigungen blockierten Profilbereichen im betrachteten Profilabschnitt erfolgt das Bewerten des Profilzustandes dabei in der Art, dass als verunreinigt identifizierte Profilbereiche bei der Bewertung nicht oder nur mit vermindertem Gewicht berücksichtigt werden. Die Bewertung der durch Auswerten der aufgenommenen optischen Sensordaten erhaltenen Informationen, insbesondere der Profiltiefeninformationen, erfolgt in Übereinstimmung mit dem fachmännischen Verständnis anhand von vordefinierten Vorgaben. Diese vordefinierten Vorgaben sind beispielsweise Mindestwerte für die mittlere Profiltiefe und/oder Mindestwerte für die kleinste detektierte Profiltiefe. Die entsprechenden Vorgaben können sich dabei in der Praxis insbesondere an gesetzlichen Vorgaben, in Testreihen gemessenen Mindestanforderungen oder schlichten Erfahrungswerten orientieren. Bevorzugt ist ein erfindungsgemäßes Verfahren, wobei die Bewertung des Profilzustandes des Profilabschnitts den Abgleich von Profiltiefeninformationen außerhalb von blockierten Profilbereichen mit vorgegebenen Mindestprofiltiefen umfasst, wobei die vorgegebenen Mindestprofiltiefen bevorzugt in Abhängigkeit des Reifentyps des Fahrzeugreifens vorgegeben werden, wobei die vorgegebenen Mindestprofiltiefen besonders bevorzugt aus einer auf der Speichereinheit gespeicherten Profiltiefendatenbank bereitgestellt werden. Bevorzugt ist zusätzlich oder alternativ ein erfindungsgemäßes Verfahren, wobei die Bewertung des Profilzustandes des Profilabschnitts die Analyse der räumlichen Varianz der Profiltiefeninformationen über das Laufstreifenprofil, bevorzugt in Umfangsrichtung, umfasst.

Im erfindungsgemäßen Verfahren erfolgt das Bewerten des Profilzustandes unter Ausblendung solcher Bereiche, welche mit Verunreinigungen blockiert sind, beispielsweise weil die Profilrille mit Schmutz oder Steinen gefüllt ist. Beispielhaft ist ein erfindungsgemäßes Verfahren, wobei die Verunreinigungen ausgewählt sind aus der Gruppe bestehend aus Fremdkörpern, bei welchen es sich nicht um Bestandteile des Fahrzeugreifen handelt, insbesondere Schmutz, Schlamm, Holzstücken, Scherben, Steinen und Metallteilen, beispielsweise Schrauben oder Nägeln. Bevorzugt ist zur Minimierung des Rechenaufwandes ein erfindungsgemäßes Verfahren, wobei die Verunreinigungen ausgewählt sind aus der Gruppe bestehend aus Verunreinigungen mit einer vorbestimmten Mindestgröße und/oder einem vorbestimmten Mindestvolumen, wobei die vorbestimmte Mindestgröße und/oder das vorbestimmte Mindestvolumen bevorzugt in Abhängigkeit von den Profildimensionen festgelegt wird.

Die Identifikation der entsprechenden mit Verunreinigungen blockierten Profilbereiche erfolgt anhand eines Kamerabildes, insbesondere eines RGB-Bildes. Beispielhaft ist somit ein erfindungsgemäßes Verfahren, wobei das Kamerabild ein RGB-Bild ist. Zur Aufnahme dieses Kamerabildes umfasst die optische Sensoranordnung der Zustandsbewertungsvorrichtung zumindest eine Kamera. Bei dieser Kamera, welche der Aufnahme des Kamerabildes dient, kann es sich um eine separate Kamera handeln, welche neben sonstigen Bestandteilen der Sensoranordnung vorliegt. Bevorzugt ist entsprechend für manche Anwendungen auch ein erfindungsgemäßes Verfahren, wobei das Kamerabild zusätzlich zu den optischen Sensordaten aufgenommen wird.

Alternativ ist es jedoch auch möglich, dass das wie nachfolgend offenbart verwendete Kamerabild auch Teil der optischen Sensordaten ist, welche zur Bewertung des Profilzustandes des Fahrzeugreifens ausgewertet werden. Insoweit kann die zur Aufnahme des Kamerabildes verwendete Kamera beispielsweise auch zur Aufnahme von Aufnahmen im fotometrischen Stereo bzw. artverwandten Konzepten verwendet werden, wobei auch das Kamerabild hierbei einbezogen werden kann.

In dem erfindungsgemäßen Verfahren wird das von der Kamera erzeugte Kamerabild dazu verwendet, um in dem aufgenommenen Kamerabild mit einem auf maschinellem Lernen basierenden Identifikationsmodul solche Profilbereiche zu identifizieren, welche mit Verunreinigungen belegt sind.

Das Konzept des maschinellen Lernens an sich sowie geeignete Algorithmen zum maschinellen Lernen sind dem Fachmann ausgehend von seinem Fachwissen grundlegend vertraut und auf maschinellem Lernen basierende Computerprogrammprodukte, welche auf die Erfordernisse der vorliegenden Erfindung angepasst werden können, sind von zahlreichen Herstellern kommerziell erhältlich. Beispielhaft ist ein erfindungsgemäßes Verfahren, wobei das Identifikationsmodul auf einem Algorithmus zum maschinellen Lernen basiert, der ausgewählt ist aus der Gruppe bestehend aus logistische Regression, Support vector machines, K-nearest neighbors-Verfahren, Entscheidungsbaumverfahren und künstlichen neuronalen Netzen, bevorzugt künstlichen neuronalen Netzen, und/oder wobei das Identifikationsmodul erhalten wird durch Anwendung eines Algorithmus zum maschinellen Lernen auf den Satz von Trainingsdaten, wobei der Algorithmus ausgewählt ist aus der Gruppe bestehend aus überwachtem Lernen, bevorzugt ausgewählt ist aus der Gruppe bestehend aus logistische Regression, Support vector machines, K-nearest neighbors-Verfahren, Entscheidungsbaumverfahren und künstlichen neuronalen Netzen, bevorzugt künstlichen neuronalen Netzen.

Zum Erhalt des entsprechenden Identifikationsmoduls (d.h. dem "Training") greift der Fachmann auf einen Trainingssatz von Trainingsdaten zurück, bei denen es sich um Kamerabilder von Profilabschnitten handelt, welche mit unterschiedlichen, bekannten und entsprechend "gelabelten" Verunreinigungen blockierte Profilbereiche umfassen, sodass das Identifikationsmodul durch überwachtes Lernen (sogenanntes "supervised learning") trainiert werden kann, um die gewünschte Funktionalität zu ermöglichen.

Wie üblich im Bereich des maschinellen Lernens kommt dem Trainingssatz, welcher dem überwachten Lernen zugrunde gelegt wird, eine große Bedeutung zu. Es kann als Vorteil des erfindungsgemäßen Verfahrens gesehen werden, dass entsprechende Sätze an Trainingsdaten für den Fachmann relativ leicht zusammenstellbar sind.

Insbesondere Reifen- und Fahrzeughersteller sowie Fuhrparkbetreiber haben regelmäßig leichten Zugriff auf Fahrzeugreifen in unterschiedlichen Abnutzungszuständen und unterschiedlichen Verschmutzungsgraden, von deren Profil entsprechende Kamerabilder aufgenommen werden können. Auf diesen Kamerabildern können Verunreinigungen beispielsweise händisch markiert und attributiert werden, um den Satz an Trainingsdaten zu erstellen. Mit diesem Trainingsdatensatz erfolgt das Training, um das Identifikationsmodul infolge des Trainings in die Lage zu versetzen, im erfindungsgemäßen Verfahren mit Verunreinigungen blockierte Profilbereiche zu identifizieren.

Ein entsprechender Satz von Trainingsdaten ist jedoch nicht nur für Reifen- und Fahrzeughersteller oder Fuhrparkbetreiber leicht verfügbar. Da es letztlich vor allem um den Zugriff auf verschmutzte Fahrzeugreifen bzw. Laufstreifenprofile geht, die nicht unbedingt noch funktional sein müssen, sind die für die Anlegung eines Trainingsdatensatzes benötigten, mit Verunreinigungen versehenen Fahrzeugreifen beispielsweise auch von Reifenentsorger zu erhalten oder zumindest vorübergehend auszuleihen. Zumindest theoretisch ist es dabei auch möglich, entsprechende Trainingsdaten im Straßenverkehr als Kamerabilder von stehenden Fahrzeugen zu sammeln.

Neben den vorstehend beschriebenen Kamerabildern von verschmutzten Profilen können auch Kamerabilder von Laufstreifenprofilen unverschmutzter, neuwertiger Reifen als Referenz mit einbezogen werden. Bevorzugt ist hierfür ein erfindungsgemäßes Verfahren, wobei der Satz von Trainingsdaten zusätzlich eine Vielzahl von Kamerabildern von Profilabschnitten ohne blockierte Profilbereichen umfasst.

Der entsprechende Trainingssatz an Kamerabildern wird bevorzugt mit der gleichen Zustandsbewertungsvorrichtung aufgenommen, die auch im erfindungsgemäßen Verfahren eingesetzt wird, um das Verfahren auf die dabei eingesetzte Zustandsbewertungsvorrichtung zu optimieren. Bevorzugt ist ein erfindungsgemäßes Verfahren, wobei der Satz von Trainingsdaten eine Vielzahl von Kamerabildern von Profilabschnitten mit mit unterschiedlichen, bekannten Verunreinigungen blockierten Profilbereichen umfasst, die zumindest teilweise, bevorzugt überwiegend, besonders bevorzugt im Wesentlichen sämtlich, mit der Kamera der elektronischen Zustandsbewertungsvorrichtung aufgenommen wurden. Hierbei ist es zweckmäßig, möglichst weitgehend den gleichen Aufnahmewinkel einzustellen, wie er auch im späteren Verfahren eingesetzt werden soll. Bevorzugt ist ein erfindungsgemäßes Verfahren, wobei der Satz von Trainingsdaten eine Vielzahl von Kamerabildern von Profilabschnitten mit mit unterschiedlichen, bekannten Verunreinigungen blockierten Profilbereichen umfasst, die zumindest teilweise, bevorzugt überwiegend, besonders bevorzugt im Wesentlichen sämtlich, in einer Ausrichtung aufgenommen wurden, die der in Verfahrensschritt a) gewählten Ausrichtung entspricht.

Nach Einschätzung der Erfinder ist es besonders vorteilhaft, in den Kamerabildern des Trainingssatzes nicht lediglich die Verunreinigungen zu identifizieren, sondern auch eine Zuweisung weiterer Bestandteile des Fahrzeugreifens vorzunehmen, beispielsweise der Laufstreifenoberfläche, der nicht belegten Profilrillen, der Reifenseitenwand und gegebenenfalls auch der Felge. Mit diesem Ansatz kann auf ein Segmentationsverfahren zurückgegriffen werden, durch das das Identifikationsmodul auf dem Kamerabild neben den Verunreinigungen, d.h. den potenziell entfernbaren Komponenten, auch die Bestandteile des Fahrzeugreifens identifizieren kann, wodurch eine Zuverlässigere Identifikation von Verunreinigungen erreicht wird. Bevorzugt ist entsprechend ein erfindungsgemäßes Verfahren, wobei das Identifikationsmodul das Identifizieren von mit Verunreinigungen blockierten Profilbereichen im Kamerabild mittels des Identifikationsmoduls auf Basis eines Segmentations-Verfahren durchführt, bevorzugt auf einem Verfahren der semantischen Segmentation oder Instanzensegmentation, bevorzugt der semantischen Segmentation.

Um das Training des Identifikationsmoduls besonders effizient zu gestalten und den Bedarf an Kamerabilden im Trainingsdatensatz zu reduzieren, schlagen die Erfinder vor, dass es ganz besonders bevorzugt ist, das Identifikationsmodul spezifisch für die Anwendung auf Fahrzeugreifen eines bestimmten Typs oder eines bestimmten Herstellers abzustimmen. Hierdurch ist es leichter möglich, das auf maschinellem Lernen basierende Identifikationsmodul für die Identifikation von Verunreinigungen beispielsweise in Winterreifenprofilen oder in charakteristischen Profilstrukturen bestimmter Reifenhersteller zu identifizieren, da die Varianz an möglichen Profilgestaltungen reduziert wird. Bevorzugt ist ein erfindungsgemäßes Verfahren, wobei der Satz von Trainingsdaten eine Vielzahl von Kamerabildern von Profilabschnitten mit mit unterschiedlichen, bekannten Verunreinigungen blockierten Profilbereichen umfasst, die zumindest teilweise, bevorzugt überwiegend, besonders bevorzugt im Wesentlichen sämtlich, an Fahrzeugreifen aufgenommen wurden, die hinsichtlich des Reifentyps und/oder des Reifenherstellers, bevorzugt des Reifentyps, dem im Verfahren bewerteten Fahrzeugreifen entsprechen.

In besonders bevorzugten Ausgestaltungen greifen das erfindungsgemäße Verfahren bzw. die erfindungsgemäße Zustandsbewertungsvorrichtung auf zwei oder mehr verschiedene Identifikationsmodule zu, wobei die Identifikationsmodule jeweils reifentyp- und/oder herstellerspezifisch trainiert wurden, wie es vorstehend erläutert ist. In dieser Verfahrensführung kann bevorzugt der Fahrzeugreifentyp und/oder Fahrzeugreifenhersteller des untersuchten Fahrzeugreifens als Eingabe in das erfindungsgemäße Verfahren eingegeben werden, um infolge dieser Eingabe das vorbestimmte und entsprechend trainierte Identifikationsmodul auszuwählen.

Vor der Aufnahme der optischen Sensordaten des Profilabschnitts mit der optischen Sensoranordnung erfolgt im erfindungsgemäßen Verfahren in Verfahrensschritt a) das Ausrichten der optischen Sensoranordnung auf den entsprechenden Profilabschnitt des Laufstreifenprofils des Fahrzeugreifens, welcher analysiert werden soll. Wie vorstehend erläutert, werden nach der Ausrichtung das Kamerabild sowie gegebenenfalls weitere zur Auswertung benötigte optische Sensordaten aufgenommen. Zumindest theoretisch ist es denkbar, dass zwischen der Aufnahme des Kamerabildes und der Aufnahme der sonstigen optischen Sensordaten mit der Sensoranordnung eine längere Zeit vergeht, sodass sich zumindest theoretisch die Ausrichtung der optischen Sensoranordnung relativ zum zu bewertenden Fahrzeugreifen merklich verändern kann.

Eine derartige Veränderung der Ausrichtung zwischen der Aufnahme des Kamerabildes und der optischen Sensordaten ist jedoch nicht bevorzugt, da es zwischen den zur Bewertung des Profilzustandes verwendeten optischen Sensordaten und dem Kamerabild, in welchem Verunreinigungen identifiziert werden, einen potenziell unbekannten Versatz generiert, welcher die Korrelation zwischen der Positionsinformation im Kamerabild und den zugehörigen optischen Sensordaten des Profilabschnittes erschwert. Anders als ein vorbekannter Versatz, welcher beispielsweise zwischen der eingesetzten Kamera und einer zur Aufnahme der optischen Sensordaten verwendeten Scannervorrichtung in der optischen Sensoranordnung bestehen kann, ist ein solcher zufälliger Versatz ein potenzieller Störfaktor, welcher regelmäßig mit einem gesteigerten Bedarf an Rechenkapazität einhergeht, um den Versatz zwischen den beiden Datensätzen zu korrigieren, beispielsweise durch Zuordnung von Strukturmerkmalen im Laufstreifenprofil.

Der Fachmann versteht im Lichte der vorstehenden Offenbarung, dass der benötigte Rechenaufwand erheblich reduziert werden kann, wenn das Kamerabild, in dem Verunreinigungen identifiziert werden, und die optischen Sensordaten, möglichst weitgehend und bevorzugt im Wesentlichen vollständig aus der gleichen Position aufgenommen werden, wodurch die Korrelation der im Kamerabild identifizierten verschmutzten Bereiche mit den korrespondierenden Bereichen in den optischen Sensordaten besonders leicht möglich ist. Es kann als großer Vorteil des erfindungsgemäßen Verfahrens gesehen werden, dass die Einstellung eines entsprechenden geringen Versatzes in der Ausrichtung mit einer Vielzahl von Maßnahmen effizient erreicht werden kann, insbesondere dann, wenn die zur Aufnahme des Kamerabildes verwendete Kamera auch einen Beitrag zu den optischen Sensordaten liefert, auf deren Grundlage die Bewertung des Profilzustandes erfolgt. Die nach Einschätzung der Erfinder einfachste Möglichkeit zur Wahrung eines geringen Versatzes besteht darin, das Kamerabild und die sonstigen optischen Sensordaten im Wesentlichen gleichzeitig aufzunehmen, oder zwischen der Aufnahme nur einen sehr geringen Zeitversatz vorzusehen. Durch die entsprechende Ausgestaltung ist der zeitliche Versatz zwischen den Aufnahmen so gering, dass beispielsweise eine als Mobiltelefon ausgeführte Zustandsbewertungsvorrichtung, welche von einem Anwender in der Hand gehalten wird, zwischen den beiden Aufnahmen näherungsweise nicht bewegt wird. Bevorzugt ist somit ein erfindungsgemäßes Verfahren, wobei die Ausrichtung und/oder der Position, bevorzugt der Ausrichtung und der Position, der optischen Sensoranordnung relativ zum Fahrzeugreifen zwischen der Aufnahme der optischen Sensordaten und des Kamerabildes im Wesentlichen nicht verändert wird, und/oder wobei die Aufnahme der optischen Sensordaten und des Kamerabildes in einem zeitlichen Abstand von 0,1 s oder weniger, bevorzugt 0,05 s oder weniger, besonders bevorzugt im Wesentlichen zeitgleich, erfolgt.

Insbesondere wenn ein größerer zeitlicher Versatz zwischen den Aufnahmen nicht zu vermeiden ist, schlagen die Erfinder vor, dass eine geeignete Korrektur der Ausrichtung bzw. Position erfolgen sollte, was beispielsweise wie vorstehend beschrieben über eine Mustererkennung und eine entsprechende Korrelation der Bilder erfolgen kann. Bevorzugt ist hierfür ein erfindungsgemäßes Verfahren, wobei die elektronische Datenverarbeitungsvorrichtung dazu eingerichtet ist, eine Änderung der Ausrichtung und/oder der Position, bevorzugt der Ausrichtung und der Position, der optischen Sensoranordnung zwischen der Aufnahme der optischen Sensordaten und des Kamerabildes zu kompensieren und die im Kamerabild identifizierten blockierten Profilbereiche den korrespondierenden optischen Sensordaten, die an den identifizierten blockierten Profilbereichen aufgenommen wurden, zuzuordnen, um diese bei der Bewertung des Profilzustandes in Verfahrensschritt c) nicht oder in verringertem Umfang zu berücksichtigen.

Insbesondere wenn eine Positions- und/oder Ausrichtungsänderung zwischen den Aufnahmen im jeweiligen Anwendungsfall nicht zu vermeiden ist, schlagen die Erfinder vor, dass die Zustandsbewertungsvorrichtung zusätzlich mit entsprechenden Sensoren ausgerüstet werden kann, durch die die Änderung der Position bzw. Ausrichtung der Zustandsbewertungsvorrichtung registriert werden kann. Die entsprechenden Informationen ermöglichen es, den zwischen den Aufnahmen erzeugten Versatz effizienter und mit verringertem Ressourcenbedarf zu kompensieren. Bevorzugt ist ein erfindungsgemäßes Verfahren, wobei die Zustandsbewertungsvorrichtung zusätzlich umfasst:
iii) einen oder mehrere Positions- und/oder Ausrichtungssensoren,
wobei die elektronische Datenverarbeitungsvorrichtung dazu eingerichtet ist, eine von den Positions- und/oder Ausrichtungssensoren registrierte Änderung der Position und/oder Ausrichtung der optischen Sensoranordnung zwischen der Aufnahme der optischen Sensordaten und des Kamerabildes zu kompensieren und die im Kamerabild identifizierten blockierten Profilbereiche den korrespondierenden optischen Sensordaten, die an den identifizierten blockierten Profilbereichen aufgenommen wurden, zuzuordnen, um diese bei der Bewertung des Profilzustandes in Verfahrensschritt c) nicht oder in verringertem Umfang zu berücksichtigen.

Die Erfinder schlagen vor, dass die im erfindungsgemäßen Verfahren erreichte Profilzustandsbewertung über eine geeignete Ausgabeeinheit der Zustandsbewertungsvorrichtung an den Anwender ausgegeben werden sollte. Bevorzugt ist ein erfindungsgemäßes Verfahren, zusätzlich umfassend den Verfahrensschritt:
d) Ausgeben der Profilzustandsbewertung über eine Ausgabeeinheit der Zustandsbewertungsvorrichtung.

Hinsichtlich der Art und Weise dieser Ausgabe besteht insoweit eine breite Palette an Möglichkeiten, die insbesondere davon abhängt, welche Informationstiefe im erfindungsgemäßen Verfahren an den Nutzer ausgegeben werden soll. In der einfachsten Ausgestaltung wäre es beispielsweise denkbar, dass das Ausgeben der Zustandsinformation sich auf den Hinweis beschränkt, dass ein Reifenwechsel notwendig ist. Bevorzugt ist ein erfindungsgemäßes Verfahren, wobei das Ausgeben der Profilzustandsbewertung die Ausgabe eines Warnhinweises zu einem notwendigen Reifenwechsel umfasst.

Auch wenn die Ausgabe in Verfahrensschritt d) theoretisch beispielsweise lediglich durch einen Signalton erfolgen könnte, ist es mit Blick auf die Anwenderakzeptanz für im Wesentlichen alle Ausführungsformen bevorzugt, wenn die Zustandsinformation zumindest anteilig visuell über ein Display der Zustandsbewertungsvorrichtung ausgegeben wird, wobei im Falle der Widergabe einer dreidimensionalen Repräsentation des Laufstreifens insbesondere auch die identifizierten, mit Verunreinigungen blockierten Profilbereiche visuell kenntlich gemacht werden können. Bevorzugt ist entsprechend ein erfindungsgemäßes Verfahren, wobei das Ausgeben der Profilzustandsbewertung die Ausgabe einer dreidimensionalen Repräsentation des Profilabschnitts umfasst, bevorzugt mit Kennzeichnung der mit Verunreinigungen blockierten Profilbereiche. Bevorzugt ist hierfür ein erfindungsgemäßes Verfahren, wobei die Ausgabeeinheit ein Display umfasst.

Der Fachmann versteht, dass die Erfindung zudem eine Zustandsbewertungsvorrichtung betrifft, die die notwendigen baulichen Elemente umfasst, beispielsweise eine Kamera und einen Laserscanner in der optischen Sensoranordnung, und welche darüber hinaus durch die elektronische Datenverarbeitungsvorrichtung und die darauf ablaufenden Computerprogrammprodukte spezifisch dafür eingerichtet ist, die Funktionalität zur Durchführung des erfindungsgemäßen Verfahrens zu ermöglichen. Die Erfindung betrifft somit auch eine elektronische Zustandsbewertungsvorrichtung für den Einsatz in einem erfindungsgemäßen Verfahren, umfassend:
i) eine optische Sensoranordnung mit einer Kamera, und
ii) eine elektronische Datenverarbeitungsvorrichtung mit einer Speichereinheit,

wobei die elektronische Datenverarbeitungsvorrichtung dazu eingerichtet ist, in einem von der Kamera aufgenommenen Kamerabild eines Profilabschnitts mit Verunreinigungen blockierte Profilbereiche im Profilabschnitt zu identifizieren,
wobei das Identifizieren von mit Verunreinigungen blockierten Profilbereichen im Kamerabild mittels eines auf der Speichereinheit gespeicherten, auf maschinellem Lernen basierenden Identifikationsmoduls erfolgt, wobei die elektronische Datenverarbeitungsvorrichtung dazu eingerichtet ist, das aufgenommene Kamerabild des Profilabschnitts als Eingabe in das Identifikationsmodul zu geben und mit dem Identifikationsmodul mit Verunreinigungen blockierte Profilbereiche im Profilabschnitt zu identifizieren,
wobei das Identifikationsmodul dazu trainiert ist, in einem Kamerabild eines Laufstreifenprofils mit Verunreinigungen blockierte Profilbereiche im Profilabschnitt zu identifizieren, wobei das Training des Identifikationsmoduls durch überwachtes Lernen mit einem Satz von Trainingsdaten erfolgt, welcher eine Vielzahl von Kamerabildern von Profilabschnitten umfasst, welche mit unterschiedlichen, bekannten Verunreinigungen blockierte Profilbereiche umfassen,
wobei die elektronische Datenverarbeitungsvorrichtung dazu eingerichtet ist, auf Basis von mittels der optischen Sensoranordnung aufgenommenen optischen Sensordaten des Profilabschnitts den Profilzustand des Fahrzeugreifens zu bewerten,
wobei die elektronische Datenverarbeitungsvorrichtung dazu eingerichtet ist, die identifizierten blockierten Profilbereiche bei der Bewertung des Profilzustandes nicht oder in verringertem Umfang zu berücksichtigen.

Offenbart wird abschließend zudem ein Computerprogrammprodukt, umfassend, umfassend Befehle, die bei der Ausführung des Programms durch eine Datenverarbeitungsvorrichtung einer erfindungsgemäßen elektronischen Zustandsbewertungsvorrichtung, diese veranlasst, die Verfahrensschritte b) und c) sowie optional d) des erfindungsgemäßen Verfahrens auszuführen.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Darstellung einer erfindungsgemäßen Zustandsbewertungsvorrichtung im Einsatz in einem erfindungsgemäßen Verfahren; und
- Fig. 2: eine schematische Visualisierung der Berücksichtigung von mit Verunreinigungen blockierten Profilbereichen bei der Bewertung des Profilzustandes.

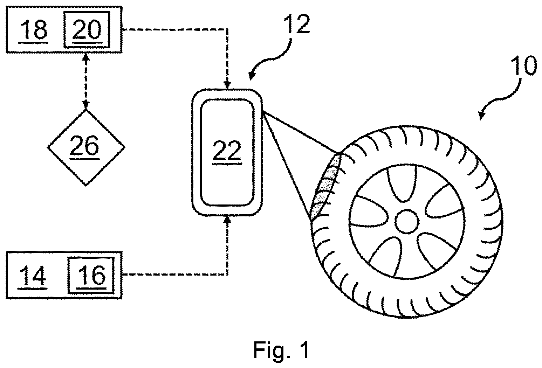

Fig. 1 zeigt eine schematische Darstellung einer erfindungsgemäßen Zustandsbewertungsvorrichtung 12 in Einsatz in einem erfindungsgemäßen Verfahren zur Bewertung des Profilzustandes eines Laufstreifenprofils eines Fahrzeugreifens 10. Die Zustandsbewertungsvorrichtung 12 ist dabei als Mobiltelefon ausgeführt, welches durch ein Computerprogrammprodukt dazu eingerichtet ist, unter Rückgriff auf die im Mobiltelefon verfügbaren Sensoreinrichtungen das erfindungsgemäße Verfahren auszuführen.

Hierfür umfasst die Zustandsbewertungsvorrichtung 12 eine Kamera 16 sowie einen LIDAR-Scanner ("light detection and ranging"). Bei diesem LIDAR-Scanner handelt es sich um eine Form des dreidimensionalen Laserscannings, mit der optische Sensordaten des Profilabschnitts 22 erhalten werden können, aus denen sich besonders leicht Informationen über die Profiltiefe im Profilabschnitt 22 erhalten lassen bzw. eine dreidimensionale Repräsentation des Profilabschnitts 22, aus dem die Profiltiefen ableitbar sind, berechnen lassen. Geeignete mobile Endgeräte, die in dieser Form als Zustandsbewertungsvorrichtung 12 fungieren können, sind beispielsweise Mobiltelefone, welche von der Firma Apple unter dem Handelsnamen iPhone 12, 13 oder 14 kommerziell erhältlich sind. Neben der Kamera 16 und dem LIDAR-Scanner der optischen Sensoranordnung 14 umfasst die Zustandsbewertungsvorrichtung 12 als Teil einer typischen Datenverarbeitungsinfrastruktur eine elektronische Datenverarbeitungsvorrichtung 18 mit entsprechenden Speichereinheiten 20.

Zur Durchführung des erfindungsgemäßen Verfahrens wird die Zustandsbewertungsvorrichtung 12, genauer die optische Sensoranordnung 14, auf einen Profilabschnitt 22 des Laufstreifenprofils des Fahrzeugreifens 10 ausgerichtet. Nach dieser Ausrichtung werden die für das weitere Verfahren benötigten Daten aufgenommen. Hierzu gehören die mit dem LIDAR-Scanner aufgenommenen optischen Sensordaten des Profilabschnitts 22 sowie das mit der Kamera 16 aufgenommene Kamerabild des mit LIDAR vermessenen Profilabschnitts 22. In vorteilhafter Weise ist es hierbei möglich, die optischen Sensordaten und das Kamerabild mit einem für den menschlichen Nutzer kaum merkbaren Versatz zu registrieren, sodass eine Korrelation des Kamerabildes mit den optischen Sensordaten besonders leicht möglich ist, da diese im Wesentlichen aus der gleichen Perspektive aufgenommen wurden. Der so erhaltene Datensatz aus Kamerabild und den optischen Sensordaten des LIDAR-Scanners wird anschließend durch die elektronische Datenverarbeitungsvorrichtung 18 verarbeitet.

Hierzu wird das Kamerabild von der elektronischen Datenverarbeitungsvorrichtung 18 als Eingabe in ein in der Speichereinheit 20 gespeichertes Identifikationsmodul 26 gegeben. Dieses Identifikationsmodul 26 basiert auf maschinellem Lernen, beispielsweise auf einem künstlichen neuronalen Netzwerk, und ist durch ein geeignetes Training dazu in der Lage, in dem Kamerabild des Laufstreifenprofils solche Profilbereiche 24 zu identifizieren, welche mit Verunreinigungen, beispielsweise Schlamm und Steinen, blockiert sind und welche bei der LIDAR-basierten Bewertung der Profilqualität entsprechend nicht berücksichtigt werden sollten, um das Bewertungsergebnis nicht zu verfälschen.

Im gezeigten Beispiel der Fig. 1 ist das Identifikationsmodul 26 zu diesem Zweck durch überwachtes Lernen mit einem Satz von Trainingsdaten trainiert, welcher eine Vielzahl von Kamerabildern von Profilabschnitten 22 von Fahrzeugreifen 10 umfasst, welche bei der Zusammenstellung des Trainingsdatensatzes mit der gleichen elektronischen Zustandsbewertungsvorrichtung 12, d.h. insbesondere mit der gleichen Kamera, aufgenommen wurden. In diesen Kamerabildern wurden zur Anfertigung des Satzes an Trainingsdaten die jeweils im Profil vorliegenden Verunreinigungen markiert bzw. identifiziert und die als blockiert anzusehenden Profilbereiche um die entsprechenden Verunreinigungen herum gelabelt.

Im gezeigten Beispiel der Fig. 1 wurde zur Minimierung des Trainingsaufwands und zur Reduktion des Satzes von Trainingsdaten das Training ausschließlich mit Kamerabildern von Fahrzeugreifen 10 durchgeführt, bei denen es sich um Spezialreifen eines bestimmten Fahrzeugreifenherstellers handelt, sodass das entsprechende Computerprogrammprodukt portfoliospezifisch für diesen Fahrzeugreifenhersteller und Anwendungen im Bereich der Arbeitsfahrzeuge optimiert ist. Zudem wurde der Satz von Trainingsdaten zu etwa 10 bis 15 % mit Kamerabildern von Profilbereichen 24 ergänzt, welche nicht verunreinigt waren bzw. bei denen das Maß der Verunreinigung so gering war, dass eine nachteilige Beeinflussung der Zustandsbewertung nicht zu befürchten ist, sodass entsprechende Verunreinigungen nicht separat entfernt werden müssen.

Nach erfolgreicher Identifikation von mit Verunreinigungen blockierten Profilbereichen 24 im Kamerabild korreliert die elektronische Datenverarbeitungsvorrichtung 18 diese Informationen über das Vorliegen von Verunreinigungen mit den aufgenommenen LIDAR-Sensordaten. Die Bewertung des Profilzustands des Fahrzeugreifens im Profilabschnitt 22, erfolgt im gezeigten Beispiel durch einen Abgleich der ortsaufgelösten Profiltiefe entlang der umlaufenden zentralen Profilrille im Profilabschnitt 22 sowohl mit einer Mindestvorgabe für die durchschnittliche Profiltiefe als auch mit einer Vorgabe für den Mindestwert der minimalen Profiltiefe. Dabei werden die zuvor im Kamerabild identifizierten mit Verunreinigungen blockierten Profilbereiche 24 vollständig ausgeblendet und bei der Bewertung der Profiltiefe nicht berücksichtigt.

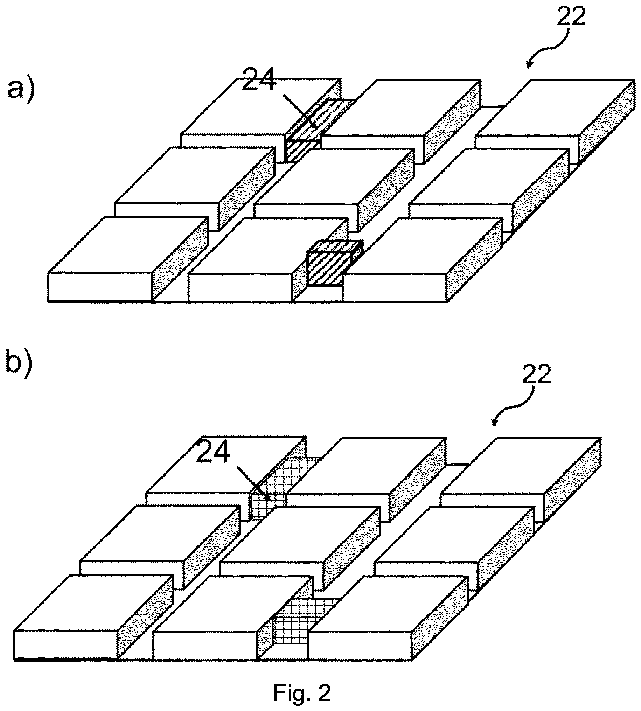

Fig. 2 visualisiert den entsprechenden Schritt bei der Bewertung des Profilzustandes in einer stark vereinfachten schematischen Ansicht. Fig. 2a) zeigt schematisch einen Profilabschnitt 22, mit neun Profilblöcken, zwischen denen sich die Profilrillen erstrecken. In den Profilrillen liegen zwei Verunreinigungen vor, die in mit Verunreinigungen blockierten Profilbereichen 24 resultieren, die zuvor mithilfe des Identifikationsmoduls 26 auf dem Kamerabild als solche identifiziert wurden. Fig. 2b) zeigt nunmehr eine schematische Repräsentation der aus den optischen Sensordaten des LIDAR-Scanners erhaltenen dreidimensionalen Repräsentation des Profilabschnitts 22, in dem schematisch angedeutet ist, dass die zuvor identifizierten, mit Verunreinigungen blockierten Profilbereiche 24 im gezeigten Beispiel aus dem Datensatz entfernt wurden, sodass sie nicht in die Bewertung der Oberflächenbeschaffenheit einfließen.

### Bezugszeichenliste

- 10: Fahrzeugreifen
- 12: Zustandsbewertungsvorrichtung
- 14: optische Sensoranordnung
- 16: Kamera
- 18: elektronische Datenverarbeitungsvorrichtung
- 20: Speichereinheit
- 22: Profilabschnitt
- 24: mit Verunreinigungen blockierte Profilbereiche
- 26: Identifikationsmodul

## Patentansprüche

1. Verfahren zur Bewertung des Profilzustandes eines Laufstreifenprofils von Fahrzeugreifen (10) mit einer elektronischen Zustandsbewertungsvorrichtung (12), umfassend:
i) eine optische Sensoranordnung (14) mit einer Kamera (16), und
ii) eine elektronische Datenverarbeitungsvorrichtung (18) mit einer Speichereinheit (20),
umfassend die Verfahrensschritte:
a) Ausrichten der optischen Sensoranordnung (14) auf einen Profilabschnitt (22) des Laufstreifenprofils des Fahrzeugreifens (10),
b) Aufnehmen von optischen Sensordaten des Profilabschnitts (22) mit der optischen Sensoranordnung (14), und
c) Auswerten der aufgenommenen optischen Sensordaten mit der elektronischen Datenverarbeitungsvorrichtung (18) zur Bewertung des Profilzustandes des Fahrzeugreifens im Profilabschnitt (22),
wobei in Verfahrensschritt b) zusätzlich zu den optischen Sensordaten oder als Bestandteil der optischen Sensordaten ein Kamerabild des Profilabschnitts (22) mit der Kamera (16) der Sensoranordnung (14) aufgenommen wird,
wobei die elektronische Datenverarbeitungsvorrichtung (18) dazu eingerichtet ist, im Kamerabild mit Verunreinigungen blockierte Profilbereiche (24) im Profilabschnitt (22) zu identifizieren,
wobei das Identifizieren von mit Verunreinigungen blockierten Profilbereichen (24) im Kamerabild mittels eines auf der Speichereinheit (20) gespeicherten, auf maschinellem Lernen basierenden Identifikationsmoduls (26) erfolgt, wobei die elektronische Datenverarbeitungsvorrichtung (18) dazu eingerichtet ist, das aufgenommene Kamerabild des Profilabschnitts (22) als Eingabe in das Identifikationsmodul (26) zu geben und mit dem Identifikationsmodul (26) mit Verunreinigungen blockierte Profilbereiche (24) im Profilabschnitt (22) zu identifizieren,
wobei das Identifikationsmodul (26) dazu trainiert ist, in einem Kamerabild eines Laufstreifenprofils mit Verunreinigungen blockierte Profilbereiche (24) im Profilabschnitt (22) zu identifizieren, wobei das Training des Identifikationsmoduls (26) durch überwachtes Lernen mit einem Satz von Trainingsdaten erfolgt, welcher eine Vielzahl von Kamerabildern von Profilabschnitten (22) umfasst, welche mit unterschiedlichen, bekannten Verunreinigungen blockierte Profilbereiche (24) umfassen, und
wobei die identifizierten blockierten Profilbereiche (24) bei der Bewertung des Profilzustandes in Verfahrensschritt c) nicht oder in verringertem Umfang berücksichtigt werden.

2. Verfahren nach Anspruch 1, wobei die elektronische Zustandsbewertungsvorrichtung (12) eine tragbare Zustandsbewertungsvorrichtung (12) ist.

3. Verfahren nach einem der Ansprüche 1 oder 2, wobei die optischen Sensordaten Profiltiefeninformationen über die ortsaufgelöste Tiefe des Laufstreifenprofils im Profilabschnitt (22) umfassen, und/oder wobei die elektronische Datenverarbeitungsvorrichtung (18) dazu eingerichtet ist, aus den optischen Sensordaten eine dreidimensionale Repräsentation des Profilabschnitts (22) zu berechnen und aus der dreidimensionalen Repräsentation Profiltiefeninformationen zu erhalten.

4. Verfahren nach einem der Ansprüche 1 bis 3, wobei die optische Sensoranordnung (14) zur Aufnahme der optischen Sensordaten zusätzlich zur Kamera (16) eine oder mehrere optische Sensoreinheiten umfasst, die ausgewählt sind aus der Gruppe bestehend aus Laserscannern und Radarscannern.

5. Verfahren nach einem der Ansprüche 1 bis 4, wobei die optische Sensoranordnung (14) zwei oder mehr voneinander beabstandete Kameras (16) umfasst, wobei die elektronische Datenverarbeitungsvorrichtung (18) dazu eingerichtet ist, eine dreidimensionale Repräsentation des Profilabschnitts (22) aus den Aufnahmen der Kameras (16) zu berechnen.

6. Verfahren nach einem der Ansprüche 1 bis 5, wobei die optische Sensoranordnung (14) zwei oder mehr voneinander beabstandete Beleuchtungsvorrichtungen umfasst, wobei die elektronische Datenverarbeitungsvorrichtung (18) dazu eingerichtet ist, eine dreidimensionale Repräsentation des Profilabschnitts (22) aus den Aufnahmen einer Kamera (16) bei unterschiedlicher Beleuchtung zu berechnen.

7. Verfahren nach einem der Ansprüche 1 bis 6, wobei die optische Sensoranordnung (14) eine Projektionsvorrichtung umfasst, die dazu eingerichtet ist, beim Aufnehmen der optischen Sensordaten mit einer Kamera (16) ein Muster auf den Profilabschnitt (22) zu projizieren, wobei die elektronische Datenverarbeitungsvorrichtung (18) dazu eingerichtet ist, eine dreidimensionale Repräsentation des Profilabschnitts (22) aus den Aufnahmen der Kamera (16), aus der Verzerrung des projizierten Musters in der Aufnahme zu berechnen.

8. Verfahren nach einem der Ansprüche 1 bis 7, wobei die elektronische Datenverarbeitungsvorrichtung (18) dazu eingerichtet ist, eine Änderung der Ausrichtung und/oder der Position der optischen Sensoranordnung (14) zwischen der Aufnahme der optischen Sensordaten und des Kamerabildes zu kompensieren und die im Kamerabild identifizierten blockierten Profilbereiche (24) den korrespondierenden optischen Sensordaten, die an den identifizierten blockierten Profilbereichen (24) aufgenommen wurden, zuzuordnen, um diese bei der Bewertung des Profilzustandes in Verfahrensschritt c) nicht oder in verringertem Umfang zu berücksichtigen.

9. Verfahren nach einem der Ansprüche 1 bis 8, wobei das Identifikationsmodul (26) das Identifizieren von mit Verunreinigungen blockierten Profilbereichen (24) im Kamerabild mittels des Identifikationsmoduls (26) auf Basis eines Segmentations-Verfahrens durchführt.

10. Elektronische Zustandsbewertungsvorrichtung (12) für den Einsatz in einem Verfahren nach einem der Ansprüche 1 bis 9, umfassend:
i) eine optische Sensoranordnung (14) mit einer Kamera (16), und
ii) eine elektronische Datenverarbeitungsvorrichtung (18) mit einer Speichereinheit (20),
wobei die elektronische Datenverarbeitungsvorrichtung (18) dazu eingerichtet ist, in einem von der Kamera (16) aufgenommenen Kamerabild eines Profilabschnitts (22) mit Verunreinigungen blockierte Profilbereiche (24) im Profilabschnitt zu identifizieren,
wobei das Identifizieren von mit Verunreinigungen blockierten Profilbereichen (24) im Kamerabild mittels eines auf der Speichereinheit (20) gespeicherten, auf maschinellem Lernen basierenden Identifikationsmoduls (26) erfolgt, wobei die elektronische Datenverarbeitungsvorrichtung (18) dazu eingerichtet ist, das aufgenommene Kamerabild des Profilabschnitts (22) als Eingabe in das Identifikationsmodul (26) zu geben und mit dem Identifikationsmodul (26) mit Verunreinigungen blockierte Profilbereiche (24) im Profilabschnitt (22) zu identifizieren,
wobei das Identifikationsmodul (26) dazu trainiert ist, in einem Kamerabild eines Laufstreifenprofils mit Verunreinigungen blockierte Profilbereiche (24) im Profilabschnitt (22) zu identifizieren, wobei das Training des Identifikationsmoduls (26) durch überwachtes Lernen mit einem Satz von Trainingsdaten erfolgt, welcher eine Vielzahl von Kamerabildern von Profilabschnitten (22) umfasst, welche mit unterschiedlichen, bekannten Verunreinigungen blockierte Profilbereiche (24) umfassen,
wobei die elektronische Datenverarbeitungsvorrichtung (18) dazu eingerichtet ist, auf Basis von mittels der optischen Sensoranordnung (14) aufgenommenen optischen Sensordaten des Profilabschnitts (22) den Profilzustand des Fahrzeugreifens (10) zu bewerten,
wobei die elektronische Datenverarbeitungsvorrichtung (18) dazu eingerichtet ist, die identifizierten blockierten Profilbereiche (24) bei der Bewertung des Profilzustandes nicht oder in verringertem Umfang zu berücksichtigen.
